# FASCICULE DE BREVET EUROPEEN

(11) **EP 2 661 611 B1**
(45) Date de publication et mention de la délivrance du brevet: **20.11.2019**
(21) Numéro de dépôt: 12702575.7
(22) Date de dépôt: 03.01.2012
(51) Int. Cl.: G01H 3/12, G01H 1/00, B62M 1/12, B62M 1/16, B62K 21/16, G01H 3/06

(54) **ETAGE DE TURBINE AVEC DISPOSITIF DE SURVEILLANCE DE ROTOR ET PROCEDE DE SURVEILLANCE**
TURNBINENSTUFE MIT VORRICHTUNG ZUR ÜBERWACHUNG EINES ROTORS UND VERFAHREN ZUR ÜBERWACHUNG
STAGE OF A TURBINE WITH DEVICE FOR MONITORING A ROTOR AND METHOD FOR MONITORING

(30) Priorité: 07.01.2011 FR 1150117
(43) Date de publication de la demande: 13.11.2013
(73) Titulaire: Safran Helicopter Engines, 64510 Bordes (FR)
(72) Inventeur: ROYER, Eric, 64160 Serres Morlaas (FR); VALLON, Antoine Yvan Alexandre, 64000 Pau (FR)
(74) Mandataire: Calvo de Nó, Rodrigo
(86) Numéro de dépôt international: PCT/FR2012/050004
(87) Numéro de publication internationale: WO 2012/093231

(56) Documents cités:
- EP-A2- 1 870 596
- WO-A1-95/30134
- DE-A1- 10 241 005
- FR-A1- 2 815 123

## Description

La présente invention concerne des dispositifs, procédés et systèmes pour la surveillance d'un rotor de turbine.

La certification d'une turbomachine exige la démonstration de la haute intégrité des ensembles tournants, où on entend par « ensemble tournant » tous les composants animés de rotation et contenant de l'énergie cinétique lors du fonctionnement de la turbomachine, tels que les rotors de turbines et compresseurs, ainsi que les arbres de liaison et de transmission. Plus précisément, dans le domaine aéronautique en particulier, les règlements de certification imposent normalement qu'aucune défaillance mécanique ne puisse conduire à un effet dangereux. Pour cette raison, il est important de pouvoir surveiller un ensemble de paramètres des ensembles tournants, et plus particulièrement des rotors de turbine, dont notamment la vitesse de rotation. De cette manière la turbomachine pourra être arrêtée immédiatement en cas de panne susceptible de provoquer son passage en survitesse.

Toutefois, l'environnement de la turbine, et notamment sa température, qui peut être de l'ordre de 1500°C, rendent très difficile une surveillance directe des paramètres de son rotor, et en particulier de sa vitesse. Typiquement, la mesure de la vitesse du rotor de turbine s'effectue donc indirectement en zone froide, de manière déportée à la turbine, à travers un capteur à réluctance variable et une roue phonique entraînée par un arbre solidaire au rotor de turbine. L'inconvénient de cette solution conventionnelle est que, en cas de rupture de l'arbre assurant la liaison mécanique entre rotor de turbine et roue phonique, ce dispositif de surveillance indirecte du rotor peut indiquer une vitesse inférieure à sa vitesse réelle, pouvant ainsi provoquer, si la régulation de la turbomachine s'effectue sur base de cette mesure de vitesse erronée, un départ en survitesse de la turbomachine, avec des conséquences potentielles très sérieuses.

La réglementation de certification des turbomachines évoluant dans le sens d'une sécurité renforcée, le risque, même minime, de rupture de l'arbre d'entraînement de la roue phonique n'est donc plus accepté.

Des solutions alternatives ont donc été considérées, permettant notamment une mesure directe de la vitesse du rotor de turbine. Pour cela, tant des capteurs capacitifs comme des capteurs optiques ont été d'abord proposés.

Les capteurs capacitifs sont des capteurs de proximité qui permettent de détecter des objets, notamment métalliques comme les aubes de turbine, lorsqu'ils entrent dans un champ de détection du capteur, modifiant la capacité de couplage entre deux électrodes du capteur formant un condensateur. Toutefois, bien que des capteurs capacitifs existent pouvant fonctionner aux températures rencontrées au cœur d'une telle turbine, l'énergie des signaux transmis par des tels capteurs est très faible, de l'ordre de quelques picofarads, ce qui rend difficile une mesure fiable.

Les capteurs optiques sont des capteurs qui permettent de détecter des objets, tels que les aubes de turbine, interrompant ou réfléchissant un faisceau lumineux, en particulier un faisceau laser. Toutefois, les capteurs optiques se révèlent généralement trop délicats pour leur usage dans l'exigeant environnement d'une turbine à haute température.

Alternativement, il a été proposé, dans le brevet US 5479826, d'utiliser un capteur comportant un émetteur-récepteur à microondes relié par un guide d'ondes à un point de prélèvement à proximité des aubes du rotor. On entend par guide d'ondes, dans le contexte de la présente description, une structure servant à guider la propagation d'ondes au moins dans une direction prédéterminée. Ainsi, un tel guide d'ondes pour microondes permet de guider la propagation des microondes de l'émetteur-récepteur vers le point de prélèvement, et de retour vers l'émetteur-récepteur après leur rebondissement sur les aubes défilant à proximité du point de prélèvement. Ainsi ce capteur peut détecter le passage des aubes par leur modification de l'impédance du guide d'ondes. Ce dispositif reste toutefois relativement complexe, avec les inconvénients en termes de coût et fiabilité que cela comporte.

Encore un autre dispositif de surveillance d'un rotor de turbine a été divulgué dans la demande de brevet US 2010/0011868. Ce dispositif de surveillance de l'état de la technique comportant un capteur acoustique, et un premier guide d'ondes sonores pour relier ledit capteur acoustique à un point de prélèvement à proximité dudit rotor de turbine. Par « onde sonore » on entend, dans le cadre de la présente divulgation, toute sorte d'onde mécanique longitudinale se propageant par un milieu fluide ou solide grâce à son élasticité, et ceci indépendamment de son domaine de fréquence. Par guide d'ondes sonores on entend donc une structure adaptée à guider la propagation de telles ondes mécaniques longitudinales. Typiquement, un tel guide d'ondes sonores prend la forme d'un conduit creux allongé dans la direction souhaitée de propagation des ondes sonores. En fonctionnement, le capteur acoustique détecte le passage des aubes du rotor par une modulation de l'amplitude d'un signal acoustique envoyé par un émetteur acoustique, à travers un second guide d'ondes sonores parallèle au premier guide, vers un point d'émission, situé aussi à proximité du rotor de turbine. Comme le passage d'une aube entre le point d'émission et le point de prélèvement bloque la transmission du signal acoustique entre le point d'émission et le point de prélèvement, le capteur acoustique reçoit donc, quand le rotor tourne, un signal modulé en amplitude par le passage des aubes.

Bien que ce dernier dispositif de l'art antérieur permette d'effectuer une mesure directe de la vitesse du rotor de turbine avec un capteur comparativement simple situé en zone froide, il nécessite toutefois deux guides d'ondes sonores ainsi qu'un émetteur d'ondes sonores. En outre, la détection du passage des aubes par modulation d'amplitude d'ondes sonores n'est applicable que pour des rotors ayant un nombre relativement limité d'aubes. En effet, la fréquence de cette modulation sera égale à la vitesse de rotation du rotor multipliée par le nombre d'aubes. Si sa vitesse de rotation est de l'ordre des 20000 à 40000 tours par minute, un rotor à dix aubes modulera donc l'amplitude du signal acoustique avec une fréquence de l'ordre des 3,3 à 6,7 kHz. Comme l'onde portante d'un signal modulé en amplitude doit avoir une fréquence nettement supérieure à celle de la modulation, ce type de dispositif nécessitera des fréquences élevées (par exemple supérieures à 80 kHz) lors de son application à des turbines avec des rotors à plus grand nombre d'aubes, telles que les turbines axiales plus couramment employées dans le domaine aéronautique, qui peuvent avoir typiquement 50 à 100 aubes.

Un autre dispositif de surveillance de rotor de turbine, comprenant un capteur acoustique pour la surveillance dudit rotor est décrit dans la publication de demande de brevet allemand DE 102 41 005 A1.

Par la présente divulgation, on vise à proposer un étage de turbine selon la revendication 1, ledit étage de turbine comportant un rotor avec des aubes présentant, en fonctionnement, une différence de pression entre intrados et extrados, un anneau de turbine entourant le rotor, une pluralité de dispositifs de surveillance, comportant chacun un capteur acoustique, pour la surveillance du rotor, et une unité de calcul reliée aux capteurs acoustiques de la pluralité de dispositifs de surveillance , qui permette la surveillance d'une ovalisation de l'anneau de turbine tout en étant particulièrement simple et donc fiable ainsi que relativement économique.

Ce but est atteint grâce au fait que chacun des dispositifs de surveillance comporte un guide d'ondes sonores pour relier ledit capteur acoustique à un point de prélèvement à proximité dudit rotor de turbine, les dispositifs de surveillance étant distribués dans l'anneau de turbine autour du rotor, le capteur acoustique de chaque dispositif de surveillance étant apte à détecter, en tant qu'ondes sonores, des fluctuations de pression correspondant à des différences de pression entre extrados et intrados d'aubes du rotor lors de leur passage à proximité du point de prélèvement correspondant, et l'unité de calcul étant configurée pour indiquer une ovalisation de l'anneau de turbine sur base de signaux transmis par les dispositifs de surveillance.

Avec un capteur acoustique ayant cette sensibilité, il n'est plus nécessaire d'émettre un signal portant pour détecter le passage des aubes, le rotor fonctionnant lui-même comme émetteur acoustique dont la fréquence du signal est directement proportionnelle au nombre d'aubes et à la vitesse de rotation du rotor. Ainsi, un rotor à 60 pales tournant à une vitesse d'entre 20000 et 40000 tours par minute émettra un signal acoustique qui reste dans une plage de fréquences de 20 kHz à 40 kHz.

L'unité de calcul peut donc analyser le signal acoustique émis par le rotor, transmis par le guide d'ondes sonores et capté par le capteur acoustique, pour calculer un ensemble de paramètres de fonctionnement du rotor. En particulier, cette unité de calcul peut être configurée pour calculer une vitesse de rotation du rotor sur base de la fréquence desdites ondes sonores, cette vitesse de rotation étant directement proportionnelle à ladite fréquence et inversement proportionnelle au nombre d'aubes dudit rotor. Toutefois, l'unité de calcul peut alternativement ou complémentairement être configurée pour calculer d'autres paramètres de fonctionnement du rotor.

Ainsi, l'unité de calcul peut aussi être configurée pour estimer une distance du rotor au point de prélèvement sur base de l'amplitude desdites ondes sonores, ce qui permet, par exemple, de déterminer le jeu du rotor par rapport à un anneau l'entourant dans lequel le point de prélèvement serait situé. L'unité de calcul peut aussi être configurée pour signaler une dégradation d'aube si une onde sonore captée par le capteur acoustique présente une amplitude sensiblement différente à la moyenne de plusieurs ondes sonores précédentes, à une valeur de référence prédéterminée, à une intervalle prédéterminée de valeurs de référence, et/ou à des ondes sonores captées par des dispositifs du même type à des positions différentes, indiquant ainsi une ou plusieurs aubes endommagées ou autrement dégradées.

Avantageusement, le guide d'ondes sonores comporte une terminaison anéchoïque sur une extrémité opposée audit point de prélèvement, le capteur acoustique étant situé entre le point de prélèvement et la terminaison anéchoïque. Cette terminaison anéchoïque peut être, par exemple, hélicoïdale, en spirale, en colimaçon, ou en queue de cochon, et sa section peut éventuellement aussi être évolutive. On peut éviter ainsi l'établissement d'une onde stationnaire dans le guide à certaines fréquences des ondes sonores. Toutefois, en particulier si la plage de fréquences correspondant à la plage de fonctionnement du rotor ne comprend aucune fréquence de résonance du guide, on peut aussi simplement envisager de situer le capteur acoustique en terminaison du guide.

Avantageusement, le point de prélèvement est un orifice dans une paroi intérieure autour du rotor. En particulier, il peut être situé face à une section centrale d'un profil d'aube, lieu auquel les fluctuations de pression dues aux différences de pression entre intrados et extrados des aubes passant devant le point de prélèvement seront plus prononcées. Pour assurer une bonne définition de ces fluctuations, ledit orifice peut présenter un diamètre inférieur à l'épaisseur d'un profil d'aube.

La présente divulgation concerne aussi une turbomachine comportant un tel étage de turbine, ainsi qu'un procédé de surveillance d'un rotor de turbine selon la revendication 7, dans lequel des fluctuations de pression dues à des différences de pression entre extrados et intrados d'aubes du rotor défilant à proximité d'un point de prélèvement sont transmises, par un guide d'ondes sonores, à un capteur acoustique pour être captées en tant qu'ondes sonores.

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :
- la figure 1 illustre schématiquement une turbomachine comportant un dispositif de surveillance suivant un mode de réalisation ;
- la figure 2 illustre schématiquement un profil d'aube de turbine, ainsi que la différence de pression entre extrados et intrados ;
- la figure 3 illustre schématiquement une section longitudinale étage de turbine avec un dispositif de surveillance ;
- la figure 3a illustre une section d'une aube de l'étage de turbine de la figure 3 le long de la ligne A-A, avec le point de prélèvement du dispositif de surveillance ;
- la figure 4 illustre un détail d'un dispositif de surveillance alternatif ;
- la figure 5 illustre schématiquement les fluctuations de pression causées par les aubes défilant à proximité du dispositif de surveillance de la figure 3 ;
- la figure 6 illustre comment plusieurs dispositifs de surveillance comme celui de la figure 3, distribués autour d'un anneau de turbine, peuvent détecter une ovalisation de l'anneau ; et
- la figure 7 illustre comment les ondes sonores captées par le dispositif de surveillance de la figure 3 peuvent indiquer la dégradation d'une aube du rotor.

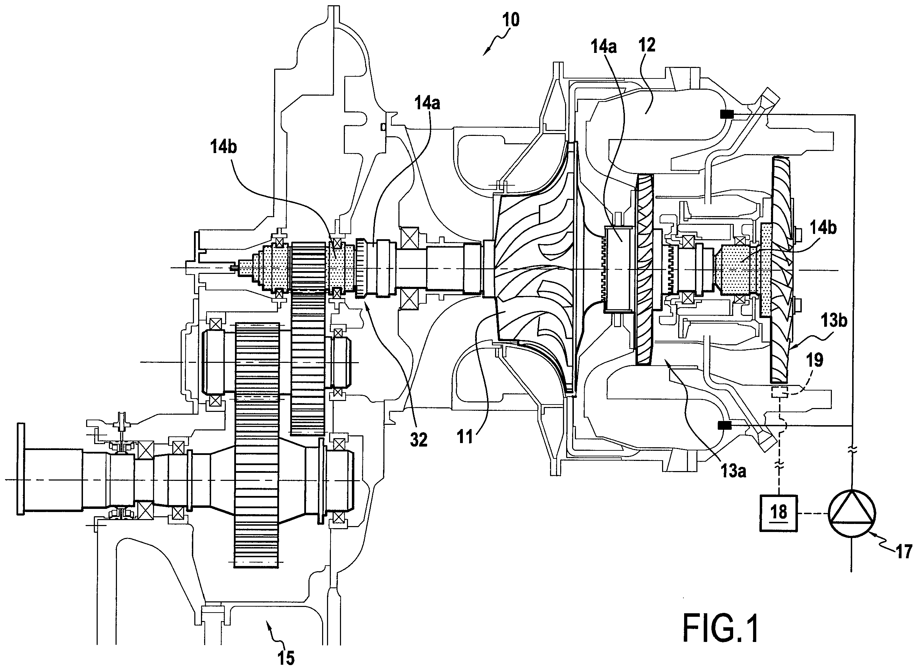

Une turbomachine 10, plus spécifiquement un turbomoteur d'aéronef à voilure tournante est illustré schématiquement sur la figure 1. Cette turbomachine 10 comporte un compresseur 11, une chambre de combustion 12, et deux turbines 13a et 13b découplées entre elles, le compresseur 11 et la turbine 13a étant couplés par un arbre commun 14a. En fonctionnement, de l'air est aspiré et comprimé par le compresseur 11, et un carburant est injecté et brûlé dans la chambre de combustion 12. La détente des gaz de combustion dans les turbines 13a et 13b actionne non seulement le compresseur 11 à travers le rotor de la turbine 13a et l'arbre 14a, mais aussi, à travers le rotor de la turbine 13b, l'arbre 14b et une transmission 15 couplée à l'arbre 14b, la voilure tournante et des organes secondaires de l'aéronef (non illustrés).

Afin de réguler le fonctionnement de la turbomachine 10, un système 17 d'alimentation de la chambre de combustion 12 en carburant est connecté à une unité de commande 18, laquelle est à son tour connecté à un dispositif 19 de surveillance d'un rotor de la turbine 13b pour en recevoir des signaux indiquant la vitesse du rotor. Ainsi, pour sécuriser la vitesse du rotor, l'unité de commande 18 coupe le débit de carburant en cas de dépassement d'une vitesse maximale autorisée ou d'une accélération maximale autorisée du rotor. Pour des raisons de sécurité, il est donc très important d'assurer la fiabilité des signaux de vitesse reçus par l'unité de commande. En particulier, une sous-estimation de vitesse par le dispositif de surveillance 19 peut provoquer une entrée en surrégime de la turbomachine 10. Pour cette raison la mesure de la vitesse par le dispositif de surveillance 19 est corrélée avec la mesure de ma vitesse mesurée traditionnellement par une roue phonique 32.

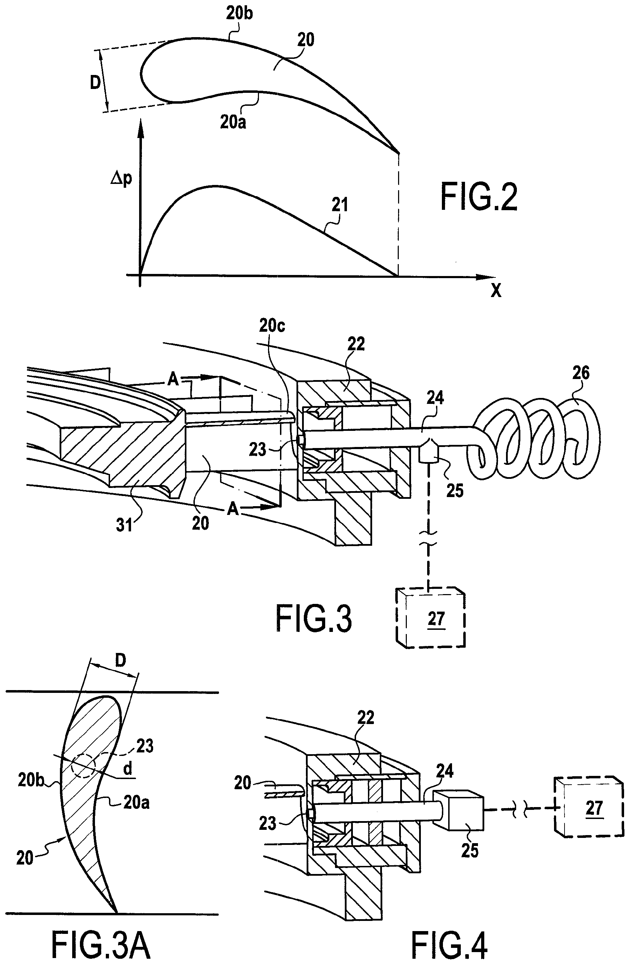

La turbine 13b est une turbine à flux axial avec un rotor comprenant une pluralité d'aubes 20 orientées radialement autour de l'arbre 14b. Chaque aube 20 présente un profil aérodynamique tel que celui illustré sur la figure 2, avec un intrados 20a, un extrados 20b et une épaisseur D. Le flux des gaz de combustion autour de ce profil provoque une différence de pression Δp illustrée par la courbe 21 sur cette même figure en fonction de la distance x dans la direction d'écoulement des gaz de combustion. On peut ainsi apprécier que cette différence de pression Δp est particulièrement prononcée sur un segment central C du profil de l'aube 20.

La figure 3 illustre une coupe longitudinale schématique d'un étage de la turbine 13b. Cet étage de turbine comporte une pluralité d'aubes 20 arrangées radialement autour de l'arbre 14b dans un rotor 31. Un anneau de turbine 22 entoure, sans les toucher, les extrémités distales 20c des aubes de la turbine 13b. Dans l'étage de turbine 13b illustré sur cette figure 3, un orifice 23 dans cet anneau de turbine 22 forme un point de prélèvement relié, à travers un guide d'ondes sonores 24 traversant l'anneau de turbine 22, à un capteur acoustique 25 situé en zone froide car ne devant donc pas être apte à résister aux températures régnant dans l'environnement proche de la turbine 13b. Ce guide d'ondes sonores 24 présente la forme d'un conduit creux allongé entre une première extrémité au point de prélèvement et une extrémité opposée. A son extrémité opposée au point de prélèvement, le guide d'ondes sonores 24 présente une terminaison anéchoïque hélicoïdale 26. Toutefois, d'autres formes alternatives de terminaison anéchoïque pourraient être considérées, comme, par exemple, des terminaisons en spirale, en colimaçon, ou en queue de cochon. Elles pourraient aussi être à section évolutive. En une variante dont un détail est illustré sur la figure 4, le capteur acoustique 25 pourraient être placé en terminaison du guide 24, à la place d'une terminaison anéchoïque, si dans la plage de fréquences à surveiller il n'y a pas un risque de résonance pouvant provoquer une onde stationnaire dans le guide 24. Ensemble, l'orifice 23, le guide 24 et le capteur 25 forment le dispositif de surveillance 19. Comme on peut voir sur la figure 3a, l'orifice 23 est situé en regard à la section centrale C du profil de l'aube 20, présentant la plus grande différence de pression Δp entre extrados 20b et intrados 20a. L'orifice 23 présente un diamètre d moindre que l'épaisseur D du profil de l'aube 20 à cette section, de manière préférentielle à ne pas chevaucher l'extrados 20b et l'intrados 20a en même temps.

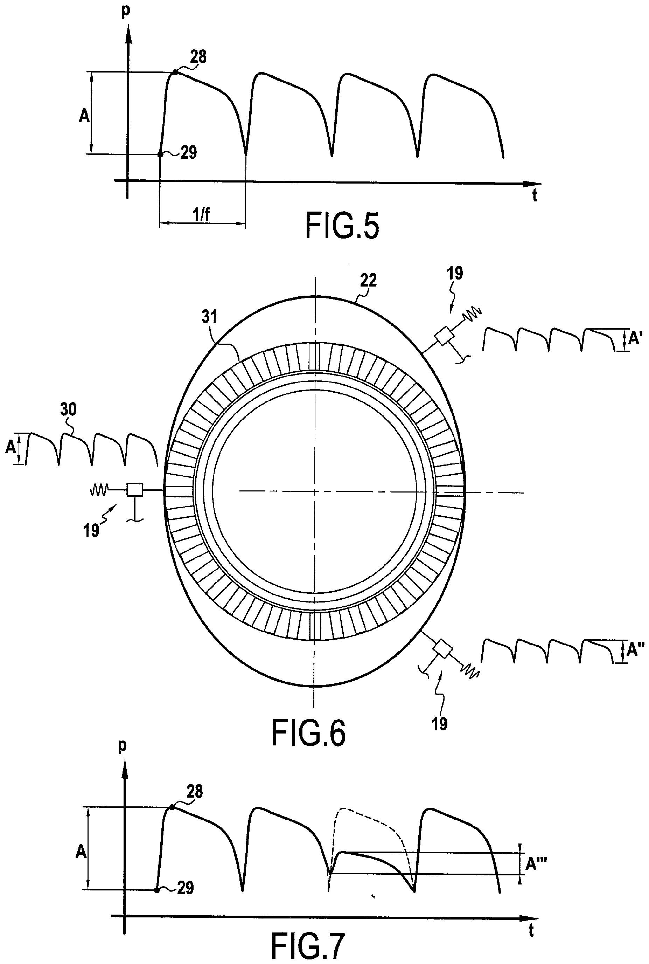

Le capteur acoustique 25 est relié à une unité de calcul 27, pouvant éventuellement être intégrée dans l'unité de commande 18 ou alternativement dans le dispositif de surveillance 19. Quand la turbine 13b est en fonctionnement, le passage successif des aubes devant le point de prélèvement cause des fluctuations de pression au point de prélèvement qui sont transmises comme ondes sonores, avec la fréquence de passage des aubes, à travers le guide d'ondes sonores 24 jusqu'au capteur acoustique 25. Le capteur 25 est configuré pour capter ces ondes sonores et les transmet, sous forme d'un signal électrique, à l'unité de calcul 27. Les fluctuations de pression au point de prélèvement, et en conséquence aussi les ondes acoustiques captées par le capteur acoustique 25 et le signal électrique en résultant, ont une forme telle que celle illustrée, à titre d'exemple, sur la figure 5. Dans cette courbe se succèdent des maxima 28 et des minima 29, correspondant respectivement aux intrados 20a et aux extrados 20b des aubes 20, avec une fréquence f correspondant à la fréquence de passage des aubes, de telle manière que la vitesse de rotation du rotor 31 peut être estimée par l'unité de calcul en divisant par le nombre d'aubes du rotor 31 cette fréquence f du signal transmis par le capteur acoustique 25.

A part la vitesse du rotor 31, d'autres paramètres de fonctionnement de la turbine 13 peuvent être inférés à partir de ce signal. Par exemple, comme l'amplitude des fluctuations de pression au point de prélèvement diminue avec une plus grande distance entre le bout des aubes 20 et le point de prélèvement, cette distance, ou au moins son évolution dans le temps, peut aussi être inférée par l'unité de calcul 27 sur base de l'amplitude A des ondes du signal transmis par le capteur acoustique 25. Il est ainsi notamment possible de mesurer le jeu des aubes 20 dans l'anneau de turbine 22, ainsi que de détecter des éventuelles dégradations de l'anneau de turbine 22 ou des aubes 20. En particulier, avec une pluralité de dispositifs de surveillance 19 distribués dans l'anneau de turbine 22 autour du rotor 31, il est possible de détecter une ovalisation de l'anneau de turbine 22, de la manière illustrée sur la figure 6. Chacun des dispositifs de surveillance 19 produit un signal 30 d'une amplitude différente A, A', A". Comme une amplitude du signal 30 plus grande indique un moindre jeu entre rotor et anneau 22, et une amplitude plus faible un plus grand jeu, cette différence d'amplitude entre les signaux indique que le jeu du rotor 31 dans l'anneau 22 varie le long de la circonférence de l'anneau 22, et que celui-ci présente donc une ovalisation telle que celle illustrée (très exagérément). L'unité de calcul 27 est donc configurée pour signaler une telle ovalisation sur base des signaux transmis par les dispositifs de surveillance 19.

Le dispositif de surveillance 19 peut aussi servir à détecter une dégradation des aubes 20 individuellement ou dans leur ensemble. Dans le contexte de la présente description on entend par « dégradation » tout changement dans l'aube 20 pouvant modifier sa performance, telle que son allongement mais aussi son usure, y compris une rupture totale ou partielle de l'aube 20. Par exemple, en particulier en cas de surrégime, l'échauffement des aubes 20 et l'effort centrifuge peut allonger les aubes 20, approchant leurs extrémités distales 20c de l'anneau de turbine 22 et du point de prélèvement du dispositif de surveillance 19. L'amplitude de la fluctuation de pression au point de prélèvement lors du passage d'une telle aube 20 allongée sera donc au-dessus d'une valeur nominale de référence. Par contre, en cas de rupture totale ou partielle d'une aube 20 individuelle, la différence de pression entre l'extrados 20b et l'intrados 20a de cette aube va aussi être moindre, ce qui se manifestera dans le signal 30 par une onde d'amplitude A'" sensiblement moindre que l'amplitude A des précédentes, comme illustré sur la fig. 7.

L'unité de calcul 27 peut donc aussi être configurée pour signaler une telle ovalisation et/ou dégradation sur base du signal transmis par un ou plusieurs dispositifs de surveillance 19.

La technologie de surveillance de vitesse d'une turbine 13a peut être transposée à l'identique de celle décrite ici pour la turbine 13b, en particulier pour la surveillance de l'allongement des aubes de la turbine 13a, soumises à des températures plus élevées.

De même, comme la technique de mesure basée sur les différences de pression de part et d'autre par l'intrados et l'extrados d'un profil d'aube est également applicable pour un compresseur qu'il soit axial ou radial ou centrifuge.

Quoique la présente invention ait été décrite en se référant à un exemple de réalisation spécifique, il est évident que des différentes modifications et changements peuvent être effectués sur cet exemple sans sortir de la portée générale de l'invention telle que définie par les revendications. Par conséquent, la description et les dessins doivent être considérés dans un sens illustratif plutôt que restrictif.

## Revendications

1. Etage de turbine (13b) comportant :
un rotor (31) avec des aubes (20) présentant, en fonctionnement, une différence de pression entre intrados (20a) et extrados (20b) ;
un anneau de turbine (22) entourant le rotor (20) ;
une pluralité de dispositifs de surveillance (19), comportant chacun un capteur acoustique (25), pour la surveillance dudit rotor (31) ; et
une unité de calcul (27) reliée aux capteurs acoustiques (25) de la pluralité de dispositifs de surveillance (19) ; et
**caractérisé en ce que** chacun desdits dispositifs de surveillance (19) comporte aussi un guide d'ondes sonores (24) configuré pour relier ledit capteur acoustique (25) à un point de prélèvement à proximité dudit rotor de turbine (13b) ; et
**en ce que** les dispositifs de surveillance (19) sont situés à des positions angulaires différentes dans l'anneau de turbine (22), le capteur acoustique (25) de chaque dispositif de surveillance (19) étant apte à détecter, en tant qu'ondes sonores, des fluctuations de pression dues à des différences de pression entre extrados (20b) et intrados (20a) d'aubes (20) du rotor (31) lors de leur passage à proximité du point de prélèvement correspondant, et l'unité de calcul étant configurée pour indiquer une ovalisation de l'anneau de turbine (22) sur base de signaux transmis par les dispositifs de surveillance (19).

2. Etage de turbine (13b) suivant la revendication 1, dans lequel ladite unité de calcul (27) est configurée pour calculer une vitesse de rotation du rotor (31) sur base de la fréquence desdites ondes sonores, cette vitesse de rotation étant directement proportionnelle à ladite fréquence et inversement proportionnelle au nombre d'aubes (20) dudit rotor (31).

3. Etage de turbine (13b) suivant une quelconque des revendications 1 à 2, dans lequel ledit guide d'ondes sonores (24) comporte une terminaison anéchoïque (26) sur une extrémité opposée audit point de prélèvement, le capteur acoustique (25) étant situé entre le point de prélèvement et la terminaison anéchoïque (26).

4. Etage de turbine (13b) suivant l'une quelconque des revendications 1 à 3, **caractérisé en ce qu'**il est un étage de turbine (13b) axiale et **en ce que** le point de prélèvement est un orifice (23) dans une paroi intérieure autour du rotor (31).

5. Turbomachine (10) comportant au moins un étage de turbine (13b) suivant une quelconque des revendications précédentes.

6. Turbomachine (10) suivant la revendication 5, dans laquelle ledit étage de turbine (13b) est dans une section chaude de la turbomachine (10), le capteur acoustique (25) étant situé dans une zone moins chaude.

7. Procédé de surveillance d'un rotor (31) de turbine (13b) dans lequel des fluctuations de pression dues à des différences de pression entre extrados (20b) et intrados (20a) d'aubes (20) du rotor (31) défilant à proximité de points de prélèvement d'une pluralité de dispositifs de surveillance (19) distribués, autour du rotor (31), dans un anneau de turbine (22) entourant le rotor (20) sont transmises, par un guide d'ondes sonores (24) de chaque dispositif de surveillance (19), à un capteur acoustique (25) du même dispositif de surveillance (19) pour être captées en tant qu'ondes sonores, et une unité de calcul (27), reliée aux capteurs acoustiques (25), infère une ovalisation de l'anneau de turbine (22) sur base de signaux transmis par les dispositifs de surveillance (19).

8. Procédé de surveillance suivant la revendication 7, dans lequel la vitesse de rotation du rotor (31) est calculée par l'unité de calcul (27) en divisant la fréquence des ondes sonores par le nombre d'aubes (20) du rotor (31).

## Patentansprüche

1. Turbinenstufe (13b) umfassend:
einen Rotor (31) mit Schaufeln (20), die im Betrieb eine Druckdifferenz zwischen der Vorderseite (20a) und Rückseite (20b) aufweisen,
einen Turbinenring (22), der den Rotor (20) umgibt,
eine Vielzahl von Überwachungsvorrichtungen (19), die jeweils einen akustischen Sensor (25) für die Überwachung des Rotors (31) umfassen, und
eine Recheneinheit (27), die mit den akustischen Sensoren (25) der Vielzahl von Überwachungsvorrichtungen (19) verbunden ist, und
**dadurch gekennzeichnet, dass** jede der Überwachungsvorrichtungen (19) auch einen Schallwellenleiter (24) umfasst, der dazu ausgelegt ist, den akustischen Sensor (25) mit einer Entnahmestelle in der Nähe des Turbinenrotors (13b) zu verbinden, und
dass sich die Überwachungsvorrichtungen (19) in unterschiedlichen Winkelpositionen in dem Turbinenring (22) befinden, wobei der akustische Sensor (25) einer jeden Überwachungsvorrichtung (19) geeignet ist, Druckschwankungen, die durch Druckdifferenzen zwischen der Rückseite (20b) und der Vorderseite (20a) von Schaufeln (20) des Rotors (31) bei ihrem Passieren in der Nähe der entsprechenden Entnahmestelle bedingt sind, als Schallwellen zu erfassen, und wobei die Recheneinheit dazu ausgelegt ist, eine Ovalisierung des Turbinenrings (22) auf Basis von Signalen, die durch die Überwachungsvorrichtungen (19) übertragen werden, anzuzeigen.

2. Turbinenstufe (13b) nach Anspruch 1, bei der die Recheneinheit (27) dazu ausgelegt ist, eine Drehzahl des Rotors (31) auf Basis der Frequenz der Schallwellen zu berechnen, wobei diese Drehzahl direkt proportional zur Frequenz ist und umgekehrt proportional zur Anzahl von Schaufeln (20) des Rotors (31) ist.

3. Turbinenstufe (13b) nach einem der Ansprüche 1 bis 2, bei der der Schallwellenleiter (24) an einem von der Entnahmestelle abgewandten Ende einen schalltoten Abschluss (26) aufweist, wobei der akustische Sensor (25) zwischen der Entnahmestelle und dem schalltoten Abschluss (26) gelegen ist.

4. Turbinenstufe (13b) nach einem der Ansprüche 1 bis 3, **dadurch gekennzeichnet, dass** sie eine axiale Turbinenstufe (13b) ist und dass die Entnahmestelle eine Öffnung (23) in einer Innenwand um den Rotor (31) herum ist.

5. Turbomaschine (10), die wenigstens eine Turbinenstufe (13b) nach einem der vorhergehenden Ansprüche umfasst.

6. Turbomaschine (10) nach Anspruch 5, bei der sich die Turbinenstufe (13b) in einem heißen Abschnitt der Turbomaschine (10) befindet, wobei der akustische Sensor (25) in einem weniger heißen Bereich gelegen ist.

7. Verfahren zur Überwachung eines Rotors (31) einer Turbine (13b), bei dem Druckschwankungen, bedingt durch Druckdifferenzen zwischen der Rückseite (20b) und der Vorderseite (20a) von Schaufeln (20) des Rotors (31), welche in der Nähe von Entnahmestellen einer Vielzahl von Überwachungsvorrichtungen (19) vorbeilaufen, die um den Rotor (31) herum in einem den Rotor (20) umgebenden Turbinenring (22) verteilt sind, über einen Schallwellenleiter (24) einer jeden Überwachungsvorrichtung (19) zu einem akustischen Sensor (25) der gleichen Überwachungsvorrichtung (19) übertragen werden, um als Schallwellen erfasst zu werden, und eine mit den akustischen Sensoren (25) verbundene Recheneinheit (27) auf Basis von durch die Überwachungsvorrichtungen (19) übertragenen Signalen auf eine Ovalisierung des Turbinenrings (22) schließt.

8. Überwachungsverfahren nach Anspruch 7, bei dem die Drehzahl des Rotors (31) durch die Recheneinheit (27) dadurch berechnet wird, dass die Frequenz der Schallwellen durch die Anzahl von Schaufeln (20) des Rotors (31) geteilt wird.

## Claims

1. A turbine stage (13b) comprising:
a rotor (31) with blades (20) that, in operation, present a pressure difference between a pressure side (20a) and a suction side (20b) ;
a turbine ring (22) surrounding the rotor (20);
a plurality of monitoring devices (19), each comprising an acoustic sensor (25), for monitoring a turbine rotor (13b) ; and
a calculation unit (27) connected to the acoustic sensors (25) of the plurality of monitoring devices ; and **characterised in that** each of said monitoring devices also comprises a sound waveguide (24) for connecting said acoustic sensor (25) to a sensing point close to said turbine rotor (13b); and
**in that** the monitoring devices (19) are located at different angular positions in the turbine ring (22), the acoustic sensor (25) being suitable for detecting, as soundwaves, pressure fluctuations due to pressure differences between the suction and pressure sides (20b, 20a) of blades (20) of the rotor (31) as they move past in the proximity of said sensing point, and the calculation unit being configured to indicate an ovalisation of the turbine ring (22) based on signals transmitted by the monitoring devices (19).

2. A turbine stage (13b) according to claim 1, wherein said calculation unit (27) is configured to calculate a speed of rotation of the rotor (31) on the basis of the frequency of said soundwaves, said speed of rotation being directly proportional to said frequency and inversely proportional to the number of blades (20) of said rotor (31).

3. A turbine stage (13b) according to any one of claims 1 to 2, wherein said sound waveguide (24) has an anechoic termination (26) on an end opposite from said sensing point, the acoustic sensor (25) being situated between the sensing point and the anechoic termination (26).

4. A turbine stage (13b) according to any one of claims 1 to 3, **characterized in that** it is an axial turbine stage (13b) and **in that** the sensing point is an orifice (23) in an inside wall around the rotor (31).

5. A turbomachine (10) including at least one turbine stage (13b) according to any one of the preceding claims.

6. A turbomachine (10) according to claim 5, wherein said turbine stage (13b) is in a hot section of the turbine engine (10), and the acoustic sensor (25) is situated in a cooler zone.

7. A method of monitoring a rotor (31) of a turbine (13b) wherein pressure fluctuations due to pressure differences between suction and pressure sides (20b, 20a) of blades (20) of the rotor (31) going past in the proximity of sensing points of a plurality of monitoring devices (19) distributed, around the rotor (31), in a turbine ring (22) surrounding the rotor (20) are transmitted by a sound waveguide (24) of each monitoring device (19) to an acoustic sensor (25) of the same monitoring device (19) in order to be picked up as soundwaves, and a calculation unit (27), connected to the acoustic sensors (25), infers an ovalisation of the turbine ring (22) based on signals transmitted by the monitoring devices (19).

8. A monitoring method according to claim 7, wherein the speed of rotation of the rotor (31) is calculated by a calculation unit (27) connected to said acoustic sensor (25) by diving the frequency of the soundwaves by the number of blades (20) of the rotor (31).
